# EUROPÄISCHE PATENTANMELDUNG

(11) **EP 2 535 800 A1**
(43) Veröffentlichungstag der Anmeldung: **19.12.2012**
(21) Anmeldenummer: 11170093.6
(22) Anmeldetag: 16.06.2011
(51) Int. Cl.: G06F 3/12, H04N 1/32

(54) **Drucksystem für Computernetzwerke; Verfahren zum Drucken von Dokumenten in einem Computernetzwerk**

(71) Anmelder: Docuform GmbH, 76185 Karlsruhe (DE)
(72) Erfinder: Denk, Martin, 78464 Konstanz (DE)
(74) Vertreter: Durm & Partner

(57) **Zusammenfassung**

Ein Drucksystem für Computernetzwerke umfasst eine Anzahl von Arbeitsplatzrechnern und verschiedene Drucker (4), die an Druckerports (5) angeschlossen sind. Auf den Arbeitsplatzrechnern ist ein einheitlicher virtueller Druckertreiber (1) installiert, welcher Druckaufträge für einen ausgewählten Druckerport (5) initialisiert. Die gerätespezifischen Druckertreiber (6) sind auf einem Druckserver (2) installiert. Im Ansprechen auf die Initialisierung eines Druckauftrags werden die Eigenschaften und Optionen des Druckers (4), der an dem ausgewählten Druckerport (5) tatsächlich zur Verfügung steht, abgerufen und an den virtuellen Druckertreiber (1) übermittelt. Nach Auswahl der angebotenen Druckereigenschaften und Freigabe des Druckauftrags durch den Benutzer ordnet ein Druckertreiber-Manager (8) den passenden gerätespezifischen Druckertreiber (6) zu, um den Druckauftrag in ausführbare Druckdaten umzusetzen. Die Installation und Verwaltung von gerätespezifischen Druckertreibern auf den Arbeitsplatzrechnern entfällt. Gleichzeitig werden die volle Leistungsfähigkeit und alle Optionen der im Netzwerk zur Verfügung stehenden Drucker (4) ausgeschöpft und Druckstops oder Fehlausdrucke verhindert.

## Beschreibung

Die Erfindung betrifft ein Drucksystem für Computernetzwerke sowie ein Verfahren zum Drucken von Dokumenten in einem solchen Computernetzwerk.

Größere Computernetzwerke umfassen nicht nur viele Arbeitsplatzrechner, sondern auch eine Anzahl von verschiedenen Druckern, von denen nur die wenigsten in unmittelbarer Nähe eines Arbeitsplatzrechners stehen. Je nachdem, welcher Art die auszudruckenden Dokumente sind, haben die Druckgeräte unterschiedliche Eigenschaften und Optionen. Zum Beispiel ist ein Bürodrucker auf das Ausdrucken von Briefen in Schwarzweiß spezialisiert, während andere Drucker farbig, auf größeren Formaten oder beidseitig drucken können. Die Erstellung technischer Zeichnungen oder der Ausdruck von Bildern erfordern wiederum andere Drucker-Hardware.

Üblicherweise verwaltet ein Druckserver die auf den Arbeitsplatzrechnern generierten Druckaufträge und leitet diese in Form von ausführbaren Druckdaten an einen ausgewählten Drucker weiter. Als Schnittstelle zwischen Druckserver und Druckern dienen Druckerports, über welche die Druckdaten an die angeschlossenen Drucker gesendet werden. Jedem Druckerport ist eine logische Zieladresse zugeordnet, die den Standort des angeschlossenen Druckers wiedergibt.

Aufgrund der Vielfalt unterschiedlicher Druckgeräte, die von verschiedenen Herstellern stammen, können die Leistungsfähigkeit und die Funktionen eines Drucksystems in der Regel nur dann voll ausgeschöpft werden, wenn es über einen gerätespezifischen Druckertreiber angesteuert wird. Fast zu jedem Gerät gibt es einen proprietären Treiber, der die hardwarenahen Funktionen bereitstellt und die Interaktion mit dem angeschlossenen Gerät steuert. Die Druckertreiber stammen fast alle vom Hersteller der Hardware, da nur sie das genaue Design der Hardware kennen und es in ihrem Interesse liegt, dass ihr Produkt durch den Kunden optimal genutzt werden kann.

In einem Computernetzwerk sind auf den Arbeitsplatzrechnern üblicherweise viele verschiedene Druckertreiber installiert, damit die Benutzer die Auswahl unter den im Netzwerk zur Verfügung stehenden Druckern haben. Bei großen Netzwerken mit einer größeren Anzahl von Drucksystemen ist es schwer, diese Treiberlandschaft zu überschauen. Insbesondere die Aktualisierung ist ein großes Problem, denn bei Austausch nur eines einzigen Druckgeräts müssten im Prinzip alle Arbeitsplatzrechner mit dem entsprechenden neuen Druckertreiber versorgt werden. Gleiches gilt für Updates.

In großen oder sehr großen Computernetzwerken wird deshalb versucht, möglichst keinen gerätespezifischen Druckertreiber zu verwenden, sondern diese durch einen einzigen universellen Druckertreiber zu ersetzen. Solche generischen Druckertreiber können aber nur eine kleine Zahl von Grundfunktionen der unterschiedlichen Drucksysteme steuern, so dass speziell teure und leistungsfähige Hardware nicht richtig ausgenutzt werden kann.

Wird ein Drucker, der einem bestimmten Druckerport zugeordnet ist, entfernt, ausgeschaltet oder durch ein anderes, nicht baugleiches Gerät ersetzt, besteht die Gefahr, dass ein Druckauftrag ins Leere geht oder fehlerhaft ausgeführt wird, solange nicht alle betroffenen Arbeitsplatzrechner rekonfiguriert sind.

Das technische Problem besteht also darin, ein Drucksystem für Computernetzwerke und ein entsprechendes Verfahren zum Drucken von Dokumenten in einem Computernetzwerk so auszugestalten, dass alle Eigenschaften, Funktionen und Optionen der angeschlossenen Drucker von jedem Arbeitsplatzrechner aus voll genutzt werden kann, gleichzeitig aber der Aufwand für Installation und Wartung der zum Drucken benötigten Software drastisch reduziert und überdies die Gefahr von Fehlern beim Drucken stark vermindert wird.

Bei der Lösung der gestellten Aufgabe wird ausgegangen von einem Drucksystem für Computernetzwerke gemäß dem Oberbegriff des Patentanspruchs 1. Das Problem wird gelöst durch die im kennzeichnenden Teil des Patentanspruchs 1 angegebenen Merkmale.

Kernstück der erfindungsgemäßen Lösung ist ein Druckserver, auf dem alle gerätespezifischen Druckertreiber der angeschlossenen Drucker installiert sind. Auf den Arbeitsplatzrechnern ist hingegen nur noch ein einheitlicher virtueller Druckertreiber installiert, welcher Druckaufträge für einen ausgewählten Druckerport initialisiert und mit dem Druckserver in bidirektionaler Kommunikationsverbindung steht.

Der zentrale Druckserver umfasst einen Druckertreiber-Manager, der im Ansprechen auf die Initialisierung eines Druckauftrags zunächst die Eigenschaften und Optionen des Druckers, der an dem ausgewählten Druckerport tatsächlich zur Verfügung steht, abruft und die entsprechenden Informationen an den virtuellen Druckertreiber übermittelt. Der Benutzer kann nun die angebotenen Eigenschaften und Optionen des Druckers auswählen bzw. akzeptieren. Erst nach Freigabe des Druckauftrags durch den Benutzer ordnet der Druckertreiber-Manager den passenden Druckertreiber zu und löst die Umsetzung des Druckauftrags in ausführbare Druckdaten aus. Die gerätespezifischen Druckertreiber müssen in dem Drucksystem also nur an einer Stelle vorgehalten werden, nämlich auf dem zentralen Druckserver.

Auf den Arbeitsplatzrechnern müssen keine Druckertreiber mehr installiert werden; stattdessen wird dort ein einheitliches Softwaremodul installiert, das für den Benutzer wie ein Druckertreiber funktioniert, ohne es allerdings wirklich zu sein. Denn der virtuelle "Druckertreiber" kann nur Druckaufträge initialisieren und an den Druckserver übermitteln; die Druckemulation selbst erfolgt durch den Druckserver unter Verwendung des gerätespezifischen Druckertreibers des Druckgeräts, das an dem ausgewählten Druckerport tatsächlich zur Verfügung steht. Dabei erfolgt die Freigabe des Druckauftrags mittels des virtuellen Druckertreibers erst, nachdem die Eigenschaften und Optionen des am Druckerport zur Verfügung stehenden Druckgeräts abgerufen wurden und der Benutzer anschließend den Druckauftrag bestätigt. Dadurch ist gewährleistet, dass der Druckauftrag nur diejenigen Eigenschaften und Optionen enthält, die der gewünschte Drucker tatsächlich bietet.

Ein großer Vorteil des erfindungsgemäßen Drucksystems liegt in der völligen Entkoppelung der Arbeitsplatzrechner von den Drucksystemen. Dadurch ist sicher gestellt, dass der Druckauftrag immer vom richtigen Druckertreiber bearbeitet und dann an den zugehörigen Drucker ausgegeben wird. Sollte ein Drucker nicht verfügbar sein oder gegen ein anderes, nicht baugleiches Gerät ausgetauscht worden sein, so werden die entsprechenden Informationen an den virtuellen Druckertreiber übermittelt, so dass der Benutzer möglicherweise nicht die von ihm erwarteten, auf jeden Fall aber die vom ausgewählten Drucker tatsächlich gebotenen Möglichkeiten auswählen kann.

Die Zuordnung des gerätespezifischen Druckertreibers unmittelbar vor Auslösung des Ausdrucks garantiert, dass immer der passende Druckertreiber benutzt wird, selbst wenn kurze Zeit vorher noch ein anderer Drucker an den ausgewählten Druckerport angeschlossen war. Bei einem Ersatz der Hardware genügt es, den zugehörigen gerätespezifischen Druckertreiber einmal, nämlich auf dem Druckserver zu installieren. Sollte an dem ausgewählten Druckerport gar kein Drucker zur Verfügung stehen, beispielsweise weil dieser abgeschaltet ist oder entfernt wurde, so würde auch dies an den virtuellen Druckertreiber gemeldet werden, so dass der Benutzer die Möglichkeit hätte, seinen Druckauftrag zu stornieren oder an einen anderen Druckerport, an dem ein geeigneter Drucker bereit steht, zu schicken.

Vorteilhaft umfasst der Druckserver eine Datenbank, in welcher die Eigenschaften und Optionen der an den Druckerports angeschlossenen Drucker gespeichert sind. Bei Initialisierung eines Druckauftrags muss dann nicht jedes Mal erneut mit dem Drucker kommuniziert werden, um dessen Eigenschaften und Optionen festzustellen. Der Druckertreiber-Manager kann vielmehr auf die in der Datenbank abgespeicherten Daten zugreifen, was die Kommunikation zwischen Druckserver und virtuellem Druckertreiber beschleunigt und überflüssigen Datenverkehr verhindert. Dabei ist selbstverständlich Vorsorge zu treffen, dass die Datenbank stets aktuell gehalten wird, d. h. insbesondere nach einem Auswechseln eines Druckers müssen dessen Eigenschaften und Optionen abgefragt und in der Datenbank hinterlegt werden.

Vorteilhaft umfasst der Druckserver ferner einen Druckdatenemulator, der mit den dynamisch zugeordneten gerätespezifischen Druckertreibern zusammenarbeitet, um die vom virtuellen Druckertreiber empfangenen Druckaufträge in ausführbare Druckdaten zu konvertieren.

In bevorzugter Weiterbildung des erfindungsgemäßen Drucksystems umfasst der Druckserver eine Warteschlange zur Zwischenspeicherung bereits freigegebener Druckaufträge. Dadurch wird es möglich, die Zuordnung des Druckertreibers zu dem ausgewählten Druckerport auf einen späteren Zeitpunkt zu verlegen; dann nämlich, wenn der Druckauftrag an der Reihe ist. Sollte sich in dem Zeitraum zwischen Freigabe des Druckauftrags und dessen Ausführung eine Änderung an der Hardware ergeben, so würde trotzdem der Druckauftrag ohne Zutun des Benutzers korrekt erledigt werden.

Ist zudem eine Einrichtung zum selektiven Abruf eines zwischengespeicherten Druckauftrags vorhanden, so kann der Benutzer nach Freigabe eines Druckauftrags seinen Arbeitsplatz verlassen und sich an einen anderen, eventuell relativ weit entfernten Ort begeben, um erst dort, gegebenenfalls nach Authentifizierung, den Ausdruck abzuholen. Damit kann also der Druckauftrag dem Benutzer folgen, und selbst dann, wenn in dem Zeitraum zwischen Freigabe des Druckauftrags und Abruf der physische Drucker ausgetauscht oder verändert wurde oder der Anwender beim Abruf selbst ein alternatives Ausgabegerät wählt, ist ein korrekter Druck, wenn auch möglicherweise mit eingeschränkten Optionen, möglich.

Die gestellte Aufgabe wird auch gelöst durch das im Patentanspruch 6 angegebene Verfahren.

Das erfindungsgemäße Verfahren beginnt mit der Initialisierung eines Druckauftrags für einen ausgewählten Druckerport durch den virtuellen Druckertreiber. Es werden dann die Eigenschaften und Optionen des Druckers, der an dem ausgewählten Druckerport tatsächlich zur Verfügung steht, abgefragt und diese Informationen an den virtuellen Druckertreiber übermittelt. Hierzu stehen der virtuelle Druckertreiber und der Druckserver in bidirektionaler Kommunikationsverbindung. Dadurch ist gewährleistet, dass dem Benutzer nur diejenigen Eigenschaften und Optionen zur Auswahl angeboten werden, die am ausgewählten Druckerport tatsächlich geboten werden.

Im nächsten Schritt erfolgt die Auswahl der angebotenen Eigenschaften und/oder Optionen des Druckers durch den Benutzer. Sodann erfolgt die Freigabe des Druckauftrags mittels des virtuellen Druckertreibers, der daraufhin den Druckauftrag an den Druckserver übergibt, einschließlich der Informationen über die Zieladresse des ausgewählten Druckerports und die vom Benutzer ausgewählten Eigenschaften und Optionen des angeschlossenen Druckers. Bis zu diesem Zeitpunkt ist der Druckauftrag zwar definiert, aber noch nicht umgesetzt.

Die "Schaltung" des gerätespezifischen Druckertreibers auf den ausgewählten Druckerport erfolgt durch den Druckertreiber-Manager des Druckservers, nachdem der freigegebene Druckauftrag von dem virtuellen Druckertreiber an den Druckserver übermittelt wurde. Erst dann werden ausführbare Druckdaten unter Zuhilfenahme des zugeordneten Druckertreibers erzeugt und diese am Ende an den ausgewählten Druckerport gesendet.

Die Kommunikation zwischen Druckserver und virtuellem Druckertreiber kann beschleunigt werden, wenn die Eigenschaften und Optionen der an den Druckerports angeschlossenen Drucker zuvor in einer speziellen Datenbank gespeichert wurden und hierzu keine Kommunikation mit dem Druckgerät in Echtzeit stattfinden muss.

Die Eigenschaften und Optionen des an dem ausgewählten Druckerport zur Verfügung stehenden Druckers werden dem Benutzer zweckmäßig in einem Fenster des virtuellen Druckertreibers zur Anzeige gebracht, damit er sie vor Freigabe des Drucks zur Kenntnis nehmen und seine Auswahl entsprechend treffen kann.

Der von dem virtuellen Druckertreiber an den Druckserver übermittelte Druckauftrag hat vorteilhaft ein vom Drucker unabhängiges Metaformat, so dass der Druckauftrag von jedem der vorhandenen Druckertreiber bzw. Drucker ausgeführt werden kann. Der Druckauftrag muss natürlich auch die logische Zieladresse des ausgewählten Druckers, d. h. den entsprechenden Druckerport, enthalten sowie gegebenenfalls weitere Informationen betreffend die Eigenschaften, Funktionen und/oder Optionen des Druckers am Zielort.

Die Trennung des erfindungsgemäßen Drucksystems in einen Druckserver, auf dem die gerätespezifischen Druckertreiber installiert sind, und einen virtuellen Druckertreiber, der nur Druckaufträge initialisiert, ermöglicht sehr gut die Realisierung einer "Follow to Print"-Funktion, bei welcher der Druckauftrag vom Benutzer auf seinem persönlichen Arbeitsplatzrechner abgeschickt, aber erst zu einem späteren Zeitpunkt an einem anderen Ort abgerufen wird, also dem Benutzer folgt. Bei herkömmlichen Systemen besteht hier die Gefahr, dass zwischen Freigabe des Druckauftrags und späterem Abruf durch den Benutzer eine Änderung im Drucksystem aufgetreten ist, beispielsweise durch Austausch eines Druckgeräts, so dass der für dieses Druckgerät bestimmte Druckauftrag dann nicht mehr ausgeführt werden kann. Wird nun im Rahmen des erfindungsgemäßen Verfahrens der Druckauftrag nach erfolgter Freigabe durch den Benutzer in einer Warteschlange des Druckservers zwischengespeichert und später der gespeicherte Druckauftrag vom Benutzer abgerufen, so erfolgt die Zuordnung des Druckertreibers und anschließende Erzeugung der ausführbaren Druckdaten erst unmittelbar vor dem Ausdrucken, wodurch ein korrekter Ausdruck selbst dann gewährleistet ist, wenn sich kurz zuvor die Hardware geändert hat.

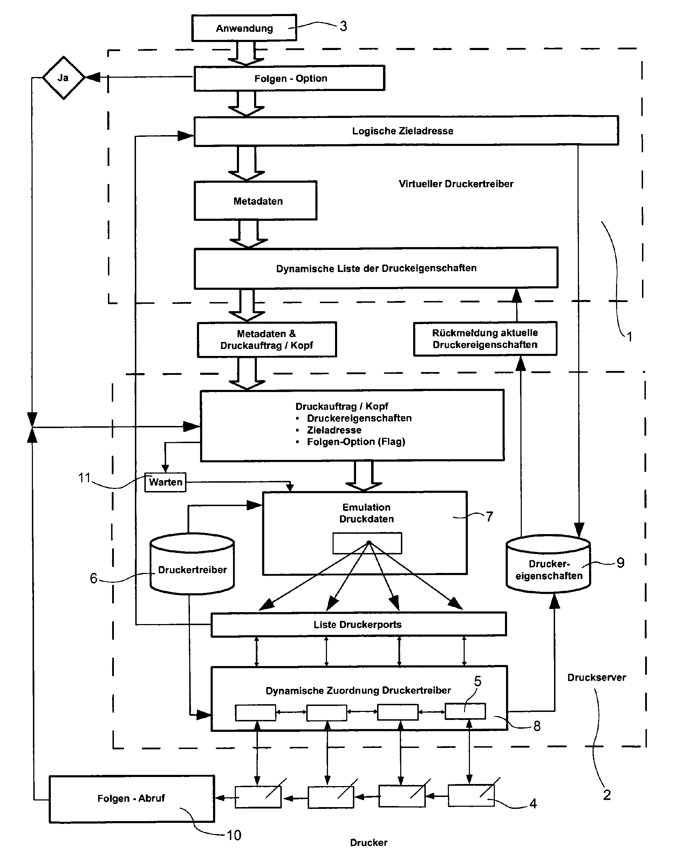

Ein Ausführungsbeispiel des erfindungsgemäßen Drucksystems und das Verfahren zum Drucken eines Dokuments mittels dieses Drucksystems wird nachstehend anhand der beigefügten Abbildung näher erläutert.

Das Drucksystem besteht im Wesentlichen aus einem virtuellen Druckertreiber 1 (virtual print driver) und einem Druckserver 2 (print server). Auf allen Arbeitsplatzrechnern innerhalb des Computernetzwerks ist der gleiche virtuelle Druckertreiber 1 installiert und läuft unter dessen Betriebssystem, vorzugsweise Windows.

Der Druckserver 2 kann, muss aber nicht auf einem dedizierten Servercomputer installiert sein. Als Middleware stellt er eine Verteilungsplattform für Druckaufträge dar, welche mittels des virtuellen Druckertreibers 1 aus einem Anwendungsprogramm 3 (application) heraus gestartet werden.

Eine Anzahl verschiedener Drucker 4 (physical printers) ist über Druckerports 5 mit dem Druckserver 2 verbunden. Jedem Druckerport 5 ist eine logische Zieladresse (logical print destination) zugeordnet, die den Ort des angeschlossenen Druckers 4 angibt. Zu jedem Drucker 4 gehört ein gerätespezifischer Druckertreiber 6 (print driver), der in einer Datenbank auf dem Druckserver 2 installiert ist. Ein Druckdatenemulator 7 erzeugt ausführbare Druckdaten mit Hilfe eines der gerätespezifischen Druckertreiber 6. Die Zuordnung des passenden Druckertreibers 6 erfolgt dynamisch durch einen Druckertreiber-Manager 8 (dynamic printer driver switchboard). Die emulierten Druckdaten werden dann an den ausgewählten Druckerport 5 geleitet.

Die Eigenschaften, Funktionen und Optionen der physischen Drucker 4 sind in einer Datenbank 9 für Druckereigenschaften (printer properties) gespeichert.

Der Druckserver 2 umfasst ferner eine Warteschlange 11 (queue) für empfangene, aber noch nicht ausgeführte Druckaufträge. Die Drucker 4 oder eine Auswahl davon sind mit einer Einrichtung 10 zum selektiven Abruf eines gespeicherten Druckauftrags verbunden (follow to print request).

Der virtuelle Druckertreiber 1 und der Druckserver 2 stehen in bidirektionaler Kommunikationsverbindung. Dadurch kann der virtuelle Druckertreiber 1 auf die Datenbank 9 für Druckereigenschaften zugreifen. Der Druckserver 2 kann mit allen angeschlossenen Druckern 4 über SNMP kommunizieren, um diese zu erkennen und deren Eigenschaften und Optionen abzufragen (feedback of current printer properties). Ein Abschalten, Verändern oder Umziehen eines physischen Druckers 4 wird sofort erkannt und die Datenbank 9 für Druckereigenschaften entsprechend aktualisiert. Auf diese Weise stehen dem virtuellen Druckertreiber 1 stets gültige Informationen über die Drucker 4 zur Verfügung, obwohl der virtuelle Druckertreiber 1 von den Druckern 4 und den zugehörigen Druckertreibern 6 entkoppelt ist.

Wenn nun ein Benutzer an seinem Arbeitsplatzrechner aus einem Anwendungsprogramm 3 heraus den virtuellen Druckserver 2 öffnet, um einen Druckauftrag zu initialisieren, so kann er aus einer Liste einen Ort auswählen, an dem der Ausdruck erfolgen soll (selection of logical print destination). Die Eigenschaften und Optionen des Druckers 4, der an dem ausgewählten Ort tatsächlich zur Verfügung steht, kann der Benutzer aus einer zweiten Liste auswählen, zum Beispiel Papierkassette, Farbe, Duplex, Heften usw. Diese Liste (spreadsheet for selection of variable printer properties) wird laufend dynamisch aktualisiert, da der virtuelle Druckertreiber 1 in Kommunikationsverbindung mit der Datenbank 9 für Druckereigenschaften steht und deshalb eine Rückmeldung über die aktuellen Druckereigenschaften erhält (feedback of current printer properties).

Nach Bestätigung bzw. Freigabe des Druckauftrags durch den Benutzer wird dieser von dem virtuellen Druckertreiber 1 in einem vom Drucker unabhängigen Metaformat meta data) an den Druckserver 2 übermittelt. Der Datensatz enthält die Informationen über den Ort (destination) und die ausgewählten Eigenschaften und Optionen (printer properties) des an dem ausgewählten Druckerport 5 zur Verfügung stehenden Druckers 4.

Optional kann der Benutzer die Option "follow to print" auswählen. In diesem Fall wird der Druckauftrag um ein entsprechendes Zeichen (flag) ergänzt.

Der Druckserver 2 empfängt den Druckauftrag (job ticket) von dem virtuellen Druckertreiber 1 im Metaformat und leitet diesen an den Druckdatenemulator 7 weiter. Wurde die Option "follow to print" ausgewählt, wird der Druckauftrag in die Warteschlange 11 (queue) gegeben, aus der er vom Benutzer später von einem anderen Ort aus abgerufen werden kann (follow to print request).

Erst unmittelbar vor Beginn des Ausdrucks ordnet der Druckertreiber-Manager 8 den gerätespezifischen Druckertreiber 6 zu, mit dessen Hilfe der Druckdatenemulator 7 ausführbare Druckdaten (print data) erzeugt und an den ausgewählten Druckerport 5 sendet. Erst zu diesem Zeitpunkt erfolgt also die endgültige Kombination von Drucker 4, Druckerport 5 und gerätespezifischem Druckertreiber 6.

Falls der Benutzer mittels "follow to print" beim Abruf des zwischengespeicherten Druckauftrag - entgegen seiner zuvor getroffenen Auswahl - einen anderen Ort für den Ausdruck wählen möchte, so wird dies durch den Druckserver 2 erkannt und der Druckertreiber-Manager 8 ordnet umgehend den zum nunmehr ausgewählten Druckerport 5 passenden Druckertreiber 6 zu. Es gibt dadurch weder einen Druckstop noch muss der Benutzer etwa an seinen Arbeitsplatz zurückkehren und einen neuen Druckauftrag initialisieren.

Bezugszeichen
- 1: Virtueller Druckertreiber
- 2: Druckserver
- 3: Anwendungsprogramm
- 4: Drucker
- 5: Druckerport
- 6: Druckertreiber
- 7: Druckdatenemulator
- 8: Druckertreiber-Manager
- 9: Datenbank für Druckereigenschaften
- 10: Einrichtung zum Abruf
- 11: Warteschlange

## Patentansprüche

1. Drucksystem für Computernetzwerke mit
einer Anzahl von Arbeitsplatzrechnern,
verschiedenen Druckern, die an Druckerports angeschlossen sind und über gerätespezifische Druckertreiber angesteuert werden,
einem Druckserver, der Druckaufträge von den Arbeitsplatzrechnern empfängt und ausführbare Druckdaten an einen Druckerport schickt,
**dadurch gekennzeichnet, dass**
auf den Arbeitsplatzrechnern ein einheitlicher virtueller Druckertreiber (1) installiert ist, welcher Druckaufträge für einen ausgewählten Druckerport (5) initialisiert,
die gerätespezifischen Druckertreiber (6) auf dem Druckserver (2) installiert sind,
der Druckserver (2) einen Druckertreiber-Manager (8) umfasst, der im Ansprechen auf die Initialisierung eines Druckauftrags durch den virtuellen Druckertreiber (1) die Eigenschaften und Optionen des Druckers (4), der an dem ausgewählten Druckerport (5) zur Verfügung steht, abruft und an den virtuellen Druckertreiber (1) übermittelt, und der nach Auswahl der angebotenen Eigenschaften und Optionen sowie Freigabe des Druckauftrags durch den Benutzer den zu diesem Drucker (4) gehörenden Druckertreiber (6) zuordnet, um den Druckauftrag in ausführbare Druckdaten umzusetzen.

2. Drucksystem nach Anspruch 1, **dadurch gekennzeichnet, dass** der Druckserver (2) eine Datenbank (9) umfasst, in welcher die Eigenschaften und Optionen der an den Druckerports (5) angeschlossenen Drucker (4) gespeichert sind.

3. Drucksystem nach Anspruch 1 oder 2, **dadurch gekennzeichnet, dass** der Druckserver (2) einen Druckdatenemulator (7) umfasst, der die von dem virtuellen Druckertreiber (1) empfangenen Druckaufträge mittels des zugeordneten gerätespezifischen Druckertreibers (6) in ausführbare Druckdaten konvertiert.

4. Drucksystem nach einem der Ansprüche 1 bis 3, **dadurch gekennzeichnet, dass** der Druckserver (2) eine Warteschlange (11) zur Zwischenspeicherung freigegebener Druckaufträge umfasst.

5. Drucksystem nach Anspruch 4, **gekennzeichnet durch** eine entfernt von den Arbeitsplatzrechnern angeordnete Einrichtung (12) zum selektiven Abruf eines gespeicherten Druckauftrags.

6. Verfahren zum Drucken von Dokumenten in einem Computernetzwerk mit
einer Anzahl von Arbeitsplatzrechnern, auf denen ein einheitlicher virtueller Druckertreiber installiert ist,
verschiedenen Druckern, die an Druckerports angeschlossen sind und über gerätespezifische Druckertreiber angesteuert werden,
einem Druckserver, auf dem die gerätespezifischen Druckertreiber installiert sind,
**gekennzeichnet durch** die folgenden Schritte:
Initialisieren eines Druckauftrags für einen ausgewählten Druckerport **durch** einen virtuellen Druckertreiber,
Abfrage der Eigenschaften und Optionen des Druckers, der an dem ausgewählten Druckerport zur Verfügung steht und Übermittlung an den virtuellen Druckertreiber,
Auswahl der angebotenen Eigenschaften und Optionen sowie Freigabe des Druckauftrags **durch** den Benutzer,
Übergabe des Druckauftrags von dem virtuellen Druckertreiber an den Druckserver, wobei der Druckauftrag die Zieladresse des ausgewählten Druckerports und die vom Benutzer ausgewählten Eigenschaften und
Optionen des angeschlossenen Druckers enthält,
Zuordnung des gerätespezifischen Druckertreibers zu dem ausgewählten Druckerport,
Erzeugen ausführbarer Druckdaten mittels des zugeordneten Druckertreibers,
Senden der Druckdaten an den ausgewählten Druckerport.

7. Verfahren nach Anspruch 6, **dadurch gekennzeichnet, dass** die abgefragten Eigenschaften und Optionen der an den Druckerports angeschlossenen Drucker in einer Datenbank gespeichert werden.

8. Verfahren nach Anspruch 6 oder 7, **dadurch gekennzeichnet, dass** die Eigenschaften und Optionen des an dem ausgewählten Druckerport zur Verfügung stehenden Druckers in einem Fenster des virtuellen Druckertreibers zur Anzeige gebracht werden, damit sie der Benutzer vor Freigabe des Drucks zur Kenntnis nehmen und auswählen kann.

9. Verfahren nach einem der Ansprüche 6 bis 8, **dadurch gekennzeichnet, dass** der Druckauftrag von dem virtuellen Druckertreiber an den Druckserver in einem vom Drucker unabhängigen Metaformat übermittelt wird.

10. Verfahren nach einem der Ansprüche 6 bis 9, **dadurch gekennzeichnet, dass** bei Auswahl einer Option "follow to print" im virtuellen Druckertreiber der Druckauftrag nach erfolgter Freigabe durch den Benutzer in einer Warteschlange des Druckservers zwischengespeichert wird, und die Zuordnung des Druckertreibers und anschließende Erzeugung der ausführbaren Druckdaten erst erfolgen, wenn später der gespeicherte Druckauftrag abgerufen wird.
